# EUROPEAN PATENT APPLICATION

(11) **EP 0 805 098 A1**
(43) Date of publication of application: **05.11.1997**
(21) Application number: 97850068.4
(22) Date of filing: 29.04.1997
(51) Int. Cl.: B62D 33/04

(54) **Ringed stanchion and removable support for a mezzanine platform of a lorry**

(30) Priority: 20.08.1996 SE 9603023; 29.04.1996 SE 9601647
(71) Applicant: Rosén, Göran, 640 50 Björnlunda (SE)
(72) Inventor: Rosén, Göran, 640 50 Björnlunda (SE)
(74) Representative: Roth, Ernst Adolf Michael

(57) **Abstract**

There is described a device for vehicle load platforms (12) to create load space above the load platform, which along the platform borders is provided with platform stanchions (11) arranged at an internal distance from each other. At each platform stanchion (11) there is arranged at at least one supporting shoulder (19) to uphold the platforms longitudinal side beams (20). The side beams (20) are designed to be connected to crossbeams (23) extending across the load platform. The supporting shoulders (19) are arranged and shaped so that when the platform stanchions are removed or turned away from the load platform they leave their carrying support for the side beam.

## Description

The present invention refers to a device for load platforms to create a load area above the load platform, which along the platform edges is provided with platform stanchions placed at an internal distance from each other.

### The background of the invention

Loading and unloading cargo, in particular unit load on pallets, is often performed from one side of the platform, resulting in that the cargo must be filled in the right unloading order. Besides, it must be transported on the load platform with special pallet lifts, and be lifted up and down by a fork lift on the ground. Often is it not possible to pile up the pallet goods on each other, which means that a special middle deck must be built, which takes time and steals load space.

### The objective and most essential features of the invention

The purpose with the present invention is to obtain at least on extra load area above the load platform and at variable heights, which load areas may be loaded and unloaded from both long sides of the vehicle, and that does not take any load area sideways, but only vertically and that may be build in very short time. Besides the demounted load area parts shall require small space.

This objectives have been solved by the fact that at each platform stanchion there is arranged at least one supporting shoulder to uphold the platform's longitudinal crossbeams, and the supporting shoulders are arranged and shaped so that when the platform stanchions are removed or turned away from the load platform they leave their carrying support for the side beam.

### Description of drawings

The invention will below be described with reference to some embodiments shown in the accompanying drawings.

Fig. 1 shows a cross-section through a load vehicle, provided with a device according to the invention.

Fig.2 shows the vehicle according to fig. 1 in side section with two down folded flaps.

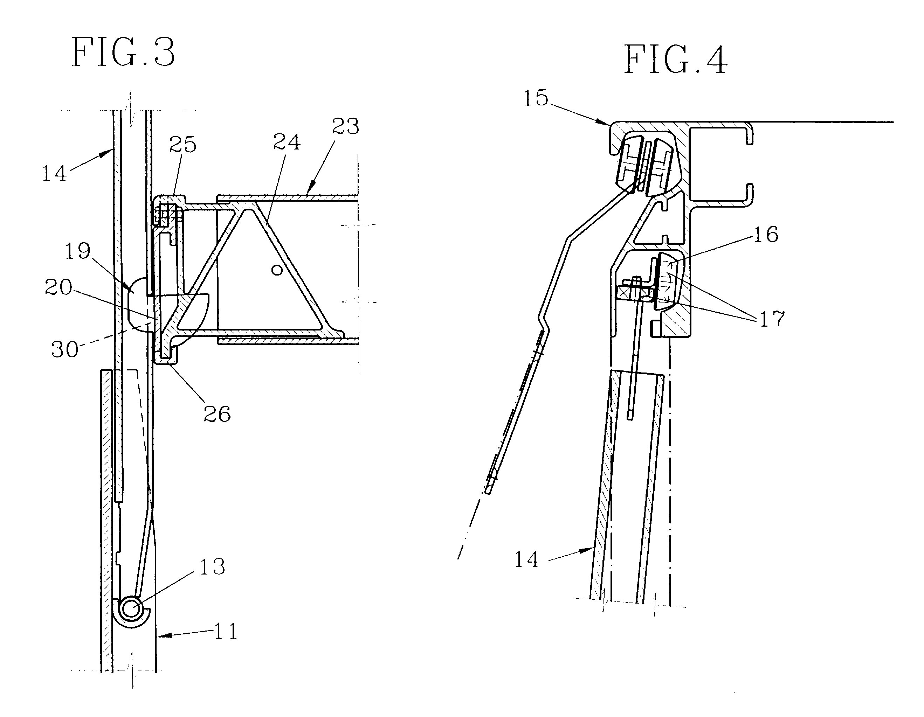

Fig.3 shows the in fig 1 encircled and with III marked area in a larger scale.

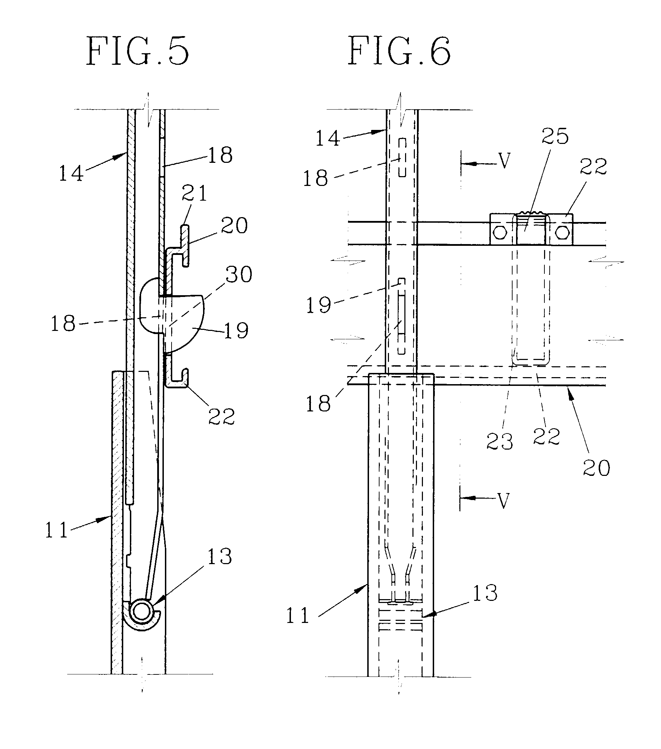

Fig.4 shows the in fig. 1 encircled and with IV marked area in a larger scale.

Fig.5 shows one with fig.3 analogue section, but without crossbeam.

Fig.6 shows the in fig.1 encircled and with III marked area in view from the front.

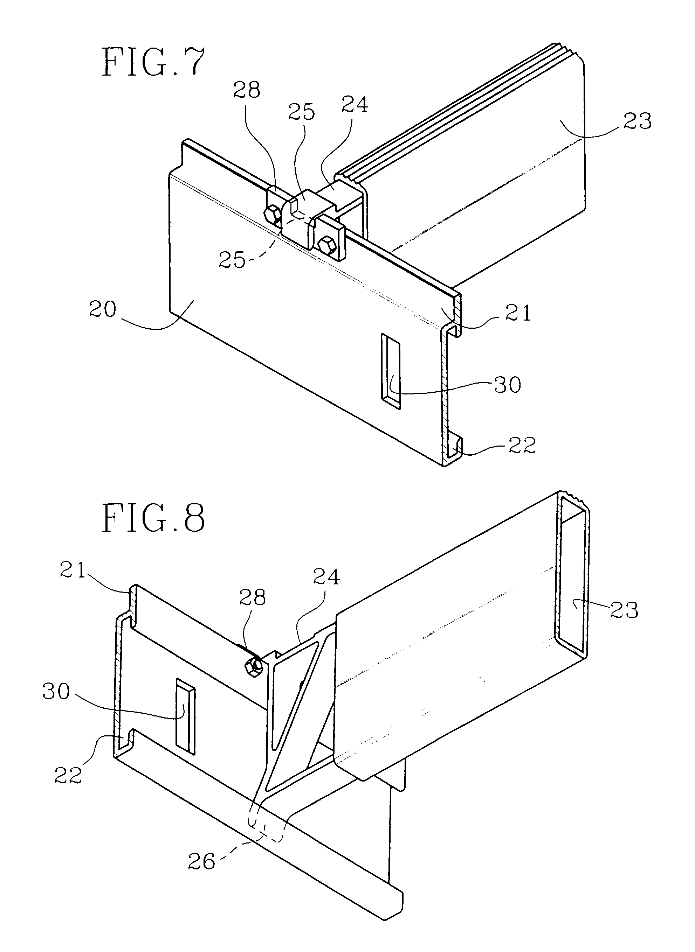

Fig. 7 and 8 show in perspective the connection of the crossbeam to one sidebeam.

### Description of embodiments

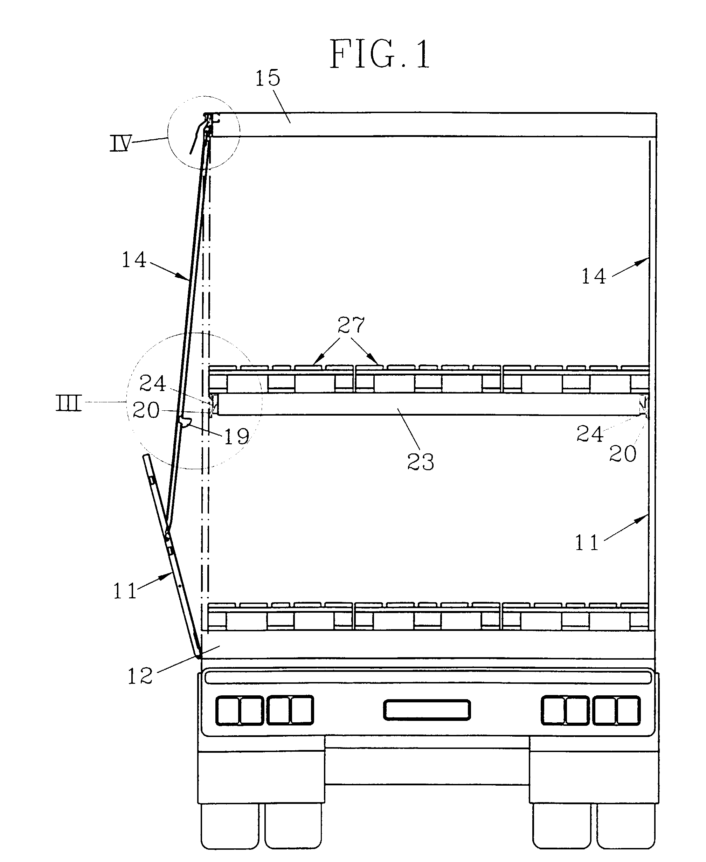

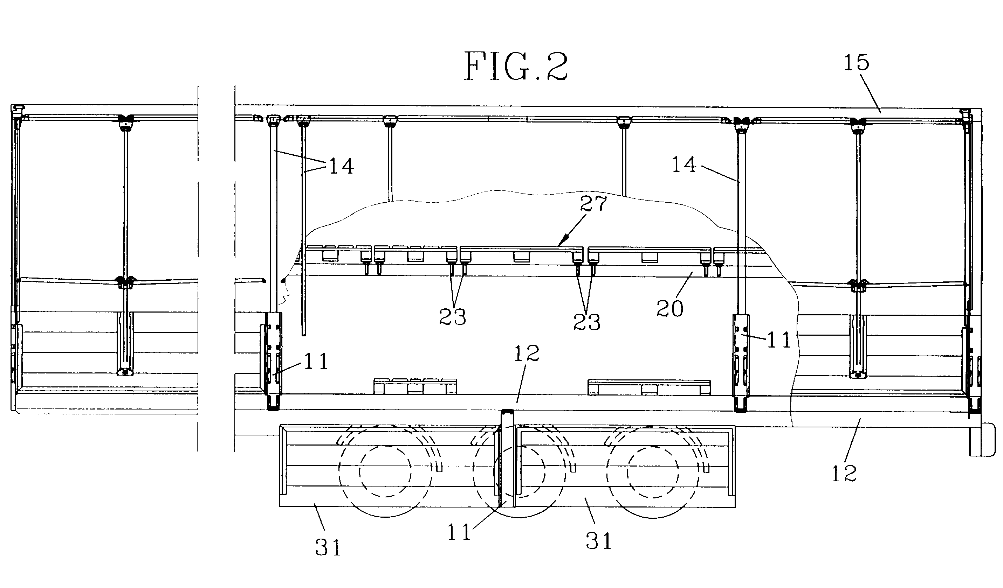

Fig. 1 and 2 shows the invention applied on a road vehicle, but it can of course be used on different vehicles, for example railway carriages but also on ships. The device according to the invention consists in known way of several platform stanchions 11 placed at an internal distances from each other, which are articulately connected with a load platform 12, by a not showed pivot axle at the stanchion's lower short end. A supporter 14 is connectable to the stanchion by a second pivot axle 13, said support is also in a known way suspended in a horizontal frame element 15, which is made as a guide 16 for a roll member 17. The frame element 15 is a part of the vehicle's upper part cover.

The insides of the supports 14 have several oblong holes 18, for the support shoulders 19, which by notches 30 in the side beams 20 uphold these along each long side of the vehicle. The side beams 20, which preferably are aluminum profiles, are made with one upper up-standing border 21 and one lower notch formed channel 22, for connection of one crossbeam 23, by a connection piece 24. This is in a similar way formed with one upper hook formed channel 25 and one lower edge list 26 for cooperation with the side beam's border 21 and channel 22. The connection piece 24 is partly inserted in and is firmly connected to the crossbeam 23, which preferably consists of an aluminum pipe.

The function of the crossbeam is to directly uphold load pallets 27, for which reason the position of the crossbeams must be fixed, but also so that these are easy to remove and to move back to exact the same position again. For this objective positioning means 28 are screwed up at the side beams 20, said position means are each provided with a recess 29, in which hook formed channel 25 of the connection piece 24 is insertable.

The device is functioning the following way.

The supporting shoulders 19 are placed at necessary height above the load platform 12 in the holes 18 of the supports 14. The notches 30 of the side beams 20 are passed over the supporting shoulders, so that these are upholding the side beams. On these side beams positioning means 28 are placed at certain mutual distances and firmly fixed, the connection piece 24 of the cross beams 23 being placed in the recesses 29 of the positioning means 28, which in this way is fixed sideways. The demounting occurs in reversed order.

When loading and unloading pallets 27 a platform stanchion 11 is opened, by disconnecting it from the load flaps 31, so that the stanchion may be turned 180° to its lower hanging position as showed in fig. 2. At this turning movement the support 14 is disengaged from the stanchion 11, at which the support remains hanging in the guide 16 of the frame element 15. The support may now with connected support shoulder 19 be turned out from the side beam 20, at which the support shoulder is removed from the notch 30. The disengaged support may then be moved sideways to a parking position, where it is not in the way when loading and unloading. The side beam 20 is dimensioned, that it upholds the cargo, even if a support, i.e. a platform stanchion 11 is removed. Thereby conditions have been made to load and unload pallets from the vehicle's long sides.

The invention is not limited to the above described embodiments, but several modifications are possible within the frame for the proceeding claim. Accordingly the platform stanchions and the support may make a connected unit, which is not connected with the cover upper part, which is upheld separately.

### List of reference numerals

11 platform stanchion
12 load platform
13 pivot axle
14 support
15 frame element
16 guide
17 roll means
18 hole
19 support shoulder
20 side beam
21 upper edge
22 lower groove
23 crossbeam
24 connection piece
25 upper groove
26 edge list
27 pallet
28 positioning means
29 recess
30 notch
31 load flap

## Claims

1. Device for vehicle load platforms (12) to create a load space above the load platform, which along the platform borders is provided with platform stanchions (11) placed at an internal distance from each other,
characterized in,
that at each platform stanchion (11) there is arranged at least one supporting shoulder (19) to uphold the platform's longitudinal side beams (20),
that the side beams (20) are designed to be connected to crossbeams (23) extending across the load platform, and
that the supporting shoulders (19) are arranged and shaped so that when the platform stanchions are removed or turned away from the load platform they leave their carrying support for the side beam.

2. Device according to claim 1,
characterized in,
that the platform stanchions (11) are in two parts, a stanchion part and support (14), which are articulately and detachably connected to each other,
that the supporting shoulders (19) are arranged at the supports (14), and
that the stanchion part is articulately connected to the load platform (12).

3. Device according to claim 1,
characterized in,
that the supporting shoulders (19) can be placed at different heights above the load platform (12) at the supports (12).

4. Device according to claim 1,
characterized in,
that the distance between the crossbeams (23) is adjustable and in each specific position lockable by means of positioning means (28).

5. Device according to claim 2,
characterized in,
that the platform stanchion (11) support (14) at its upper end remote from the stanchion part is suspended in essentially horizontal frame elements (15) of a cover upper part.

6. Device according to claim 5,
characterized in,
that the frame element (15) is made as a guide (16) for a slide- or roll member, placed at the upper end of the support.
